(19) Europäisches Patentamt
European Patent Office
Office européen des brevets

(11) **EP 1 505 924 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(21) Anmeldenummer: **03735426.3**

(22) Anmeldetag: **21.05.2003**

(51) Int Cl.:
*A61C 19/00* *(2006.01)*    *G02B 6/00* *(2006.01)*
*G02B 6/42* *(2006.01)*

(86) Internationale Anmeldenummer:
**PCT/EP2003/005316**

(87) Internationale Veröffentlichungsnummer:
**WO 2003/096925 (27.11.2003 Gazette 2003/48)**

(54) **BESTRAHLUNGSGER T**

RADIATION DEVICE

APPAREIL D'IRRADIATION

(84) Benannte Vertragsstaaten:
**AT BE BG CH CY CZ DE DK EE ES FI FR GB GR HU IE IT LI LU MC NL PT RO SE SI SK TR**

(30) Priorität: **21.05.2002 DE 10222828**

(43) Veröffentlichungstag der Anmeldung:
**16.02.2005 Patentblatt 2005/07**

(73) Patentinhaber: **3M ESPE AG**
**82229 Seefeld (DE)**

(72) Erfinder: **HARTUNG, Martin**
**82205 Gilching (DE)**

(74) Vertreter: **Vossius & Partner**
**Siebertstrasse 4**
**81675 München (DE)**

(56) Entgegenhaltungen:
**WO-A-01/19280**        **DE-A- 10 040 875**
**US-A- 5 634 711**

**Beschreibung**

Die Erfindung betrifft ein Bestrahlungsgerät mit hoher Lichtleistung, umfassend eine einzelne lichtemittierende Einheit und eine lichtleitende Einheit mit einem lichtaufnehmenden Bereich, wie einen faseroptischen Lichtleiter, sowie ein Reflektorelement, das vorzugsweise im medizinischen Bereich Anwendung findet.

Aus der JP 9-10238 A ist ein dentales Bestrahlungsgerät bekannt, bei dem ein Array aus Leuchtdioden an der Kalottenfläche eines kugelsektorförmigen Lichtleitkörpers aus Quarz oder Kunststoff angeordnet ist, dessen Spitze in einen Lichtleiterstab übergeht. Die Strahlen der Leuchtdioden werden von dem Lichtleitkörper durch Reflexion an der konischen Wandung gebündelt und in den Lichtleiterstab eingeleitet.

Die WO-97/36552 A offenbart ein weiteres dentales Bestrahlungsgerät, bei dem ein planares Array aus Leuchtdioden mit parallelen optischen Achsen der gekrümmten Eingangsfläche eines wiederum konischen Lichtleitkörpers gegenübersteht. Dieser Kondensor ist ausgangsseitig an einen Lichtleiter gekoppelt und gegebenenfalls mit einer optisch transparenten Flüssigkeit gefüllt.

Abgesehen davon, dass derartige konische Lichtleitkörper, wie sie in oben genannten Schriften, oder auch in der WO 99/16136 (Fig. 4) beschrieben werden, in der Herstellung aufwendig sind und das Gewicht des Gerätes erhöhen, verursachen sie auch erhebliche Strahlungsverluste. Diese resultieren daraus, dass bei jeder Reflexion eines Lichtstrahls an der konusförmigen Wandung des Lichtleitkörpers der Strahl um das doppelte des Konuswinkels von der optischen Achse abgelenkt wird. Dies führt schon nach wenigen Reflexionen dazu, dass der Winkel für Totalreflexion im Lichtleiter überschritten wird und die Strahlen aus dem Lichtleiter austreten oder, im Falle einer Verspiegelung des Lichtleiters, die Strahlen sogar ihre Richtung umdrehen und somit nicht zur Lichtaustrittsöffnung sondern zu der Lichteintrittsöffnung zurück geleitet werden.

Derartige Anordnungen funktionieren daher nur für den Anteil des von den LEDs eingestrahlten Lichtes, dessen Strahlen nur in einem sehr engen Winkelbereich gegenüber der optischen Achse verkippt sind. Somit kann der überwiegende Teil des von den LEDs abgestrahlten Lichts nicht zur Beleuchtung der Behandlungsfläche genutzt werden, da die Leuchtkegel, mit denen

LEDs Licht abstrahlen üblicherweise deutlich größere Öffnungswinkel aufweisen.

Aus der WO-99/16136 A (Fig. 6) ist außerdem ein Gerät mit einem mehrfachkonischen Lichtleitkörper bekannt, bei dem mehrere ringförmige Lichteintrittsflächen einer kreisförmigen Lichteintrittsfläche vorangestellt sind. Dabei wird mit dem mehrfachkonischen Lichtleitkörper das Licht von der ersten kreisförmigen Lichteintrittsfläche in den Zentralbereich zwischen der ersten ringförmigen Lichteintrittsfläche gelenkt. Zusammen mit dem Licht der LEDs, die ringförmig angeordnet diese Lichteintrittsöffnung bestrahlen, wird es nunmehr in das Zentrum einer weiteren Kombination aus LED-Ring und ringförmiger Eintrittsfläche geleitet. Das so gesammelte Licht wird nun durch den im weiteren Verlauf nochmals konischen Lichtleiter zu einer Austrittsöffnung geführt.

Auch bei dieser Anordnung gelangt aus den oben genannten Gründen nur ein geringer Anteil der von den LED emittierten Strahlen zu der Lichtaustrittsöffnung und damit zu dem zu bestrahlenden Ort. Durch die Hintereinanderschaltung mehrerer konischer Lichtleitkörper ist die Effizienz der von der Austrittsöffnung am weitest entfernt gelegenen Bereiche sogar gegenüber einem einfachkonischen Kondensor nochmals reduziert. Zudem ist die Fertigung des mehrfachkonischen Lichtleiters nochmals aufwendiger und teurer.

Es sind auch andere Ausführungen von auf LED basierten Bestrahlungsgeräten, die ohne einen konischen Lichtleitkörper und die damit verbundenen Nachteile auskommen, bekannt. So werden in der JP 08-141001 A (Fig. 1) und WO-99/35995 A (Fig. 4) optische Sammellinsen zur Bündelung der von einem LED Array emittierten Strahlen und Fokussierung dieser auf die Lichteintrittsfläche eines Lichtleiters vorgeschlagen.

Dabei wird die Gesamtheit der von den einzelnen LEDs in Richtung der Sammellinse emittierten Strahlen abgelenkt. Die Ablenkung in die gewünschte Richtung und Fokussierung der Strahlen gelingt allerdings wiederum nur für den Anteil der Strahlen, die im wesentlichen parallel auf die Sammellinse auftreffen, oder, abhängig von der Größe der Lichteintrittsfläche, geringfügig von dieser Richtung abweichen. Ein erheblicher Anteil der Strahlen kann von der Sammellinse nicht auf die Lichteintrittsöffnung geleitet werden und ist somit für die Bestrahlung des Behandlungsortes verloren.

Bei der in Fig. 1 der WO-99/35995 A gezeigten Anordnung werden 9 LEDs individuell in Richtung eines Lichtleiters ausgerichtet, wobei lediglich eine teilweise Durchhärtung einer lichthärtenden Probe beobachtet werden konnte. Dies ist auf unzureichende Lichtleistung in Folge nicht optimaler Lichteinkopplung sowie der geringen Anzahl der mit der beschriebenen Anordnung verwendbaren LEDs zurückzuführen.

Bei einem weiteren Gerät, dass in der WO-00/13608 A beschrieben ist, und auf einer ähnlichen Anordnung der LEDs zu der Lichteintrittsöffnung eines Lichtleiters basiert, wird die Lichtleistung dadurch erhöht, dass zum einen ein konischer Lichtleiter verwendet, zum anderen die Dioden mit einem Vielfachen des nominalen Arbeitsstromes beaufschlagt werden. Der konische Lichtleiter bringt die schon weiter oben beschriebenen Probleme mit sich.

Nachteilig an den hohen Betriebsströmen ist, dass überproportional viel Verlustwärme an den LEDs entsteht, wodurch das Gerät nach kurzer Zeit warm wird und längere Zeit bis zur Abkühlung nicht verwendet werden kann. Zudem leidet die Lebensdauer von LEDs stark unter den hohen Betriebsströmen. Dies äußert sich im Laufe der Zeit in einem kontinuierlichen Abfall der Lichtleistung.

Auch die in der WO-99/35995 A, der WO 02/11640 A2, oder der EP 0 879 582 A vorgeschlagenen Anordnungen für LEDs in Form von einzelnen Halbleiterchips auf einem gemeinsamen Substrat sind nicht unproblematisch, da sich die einzelnen Elemente gegenseitig aufheizen, wodurch wiederum der Lichtintensität und/oder der Lebensdauer Grenzen gesetzt sind. Zudem ist die Herstellung derartiger Anordnungen wesentlich aufwendiger und teurer, da nicht auf Standardbauteile, die auch mechanisch gut zu handhaben sind, zurückgegriffen werden kann.

Ein weiteres Bestrahlungsgerät mit mehreren LEDs ist aus der WO-01/19280 A bekannt. Die LEDs sind die in mehreren Ebenen auf eine bestimmte Weise angeordnet, um eine möglichst vorteilhafte Einkopplung des erzeugten Lichts in einen Lichtleiter zu ermöglichen.

Allen obigen Geräten ist gemeinsam, dass die erreichbaren Lichtleistungen durch die dort beschriebenen Anordnungen der LEDs limitiert sind.

Um die Lichtleistung weiter zu erhöhen wird ein Array bestehend aus einer Vielzahl von Einzel-LEDs vorgeschlagen. Allerdings wird es mit zunehmender Zahl von Einzel-LEDs immer schwieriger deren emittiertes Licht zu sammeln. So ist in der WO 02/11640 A2 beispielsweise neben einem Reflektor eine Fokussierlinse vorgesehen, um die Strahlen des LED-Array zu bündeln, damit sie in einen Lichtleiter eingekoppelt werden können.

Darüber hinaus steigt mit zunehmender Zahl von LEDs sowohl der Platzbedarf, der elektrische Leistungsbedarf und die elektrische Verlustwärme, die von den LEDs abgeführt werden muss, um eine lange Lebensdauer zu ermöglichen. Aus den genannten Gründen wäre es wünschenswert möglichst mit nur einer einzelnen LED auszukommen, was sich auch positiv auf die Herstellkosten auswirken würde.

Zur Lösung dieser Aufgabe bieten sich grundsätzlich Hochleistungs-LEDs an, die weitaus höhere Lichtleistungen emittieren können, als herkömmliche LEDs. Allerdings muss das erzeugte Licht auch hier möglichst verlustfrei gesammelt und z.B. mit einem Lichtleiter an den Behandlungsort geleitet werden, da ansonsten nicht die Leistungsfähigkeit eines LED-Arrays erreicht werden kann.

Das Dokument US-A-5 634 711 kann als nächstliegender Stand der Technik angesehen werden. Es offenbart ein Bestrahlungsgerät mit einem Gehäuse, einem Mehrzahl von lichtemittirenden Einheiten, die im Gehäuse angeordnet sind, einer lichtaufnehmenden Einheit mit einer Eintrittsöffnung, und einem Reflektorelement für jede lichtemittierende Einheit.

Bestrahlungsgeräte, die mit nur einer LED ausgestattet sind, sind beispielsweise in den Schriften US 6,318,996 B1 und WO 01/64129 A1 vorgeschlagen worden. In der WO 01/64129 wird vorgeschlagen, die LED mit derartig hohen Strömen zu beaufschlagen, dass die Lebensdauer kleiner als 10 Stunden beträgt, da ansonsten keine ausreichende Strahlungsleistung erreicht werden kann.

In der US 6,318,996 wird mit einer einzelnen LED lediglich eine Intensität zwischen 25 und etwa 38 mW/cm$^2$ erreicht. Derartige Werte sind für Bestrahlungsgeräte zum Aushärten von dentalen Werkstoffen relativ gering. Dementsprechend wird auch von einer relativ langen Beleuchtungszeit von 60 Sekunden ausgegangen. Darüber hinaus soll die LED in einem Abstand von 7 mm +/- 2 mm zum auszuhärtenden Material positioniert werden. Dies bedeutet, dass sich die LED im Mund des Patienten befindet. Selbst bei Kapselung der LED in einem Gehäuse ist keine ausreichende Hygiene, wie sie üblicherweise mittels Sterilisation bei Temperaturen von ca. 130° C erreicht wird, möglich, da diese hohen Temperaturen die LED zerstören könnten. Aus diesem Grunde hat sich für Bestrahlungsgeräte zum Aushärten von dentalen Materialien die Verwendung von lichtleitenden Elementen, beispielsweise faseroptischen Lichtleitern, als Standard durchgesetzt. Dies können nach der Behandlung vom Gehäuse abgenommen und sterilisiert werden.

Es wurde gefunden, dass Lichtstrahlen in einen faseroptischen Lichtleiter nur dann weitgehend verlustfrei eingekoppelt werden können, wenn sie unter einem bestimmten Winkel, der kleiner gleich dem sogenannten Akzeptanzwinkel ist, auf die Eintrittsfläche auftreffen.

Dieser beträgt typischerweise +/- 30°. Die in Frage kommenden LEDs emittieren Licht aber mit einem Kegel, dessen Öffnungswinkel u.U. größer als dieser maximale Einkoppelwinkel ist. Daher wird bei einer direkten Anordnung der LED vor dem Lichtleiter nur ein Teil der Leistung nutzbar.

Zur Steigerung der Einkoppeleffizienz sind Linsen auf Grund des großen Öffnungswinkels der LED (z.B. +/- 50° oder mehr) aber nur bedingt geeignet. Mit ihnen gelingt es zwar einen Teil der Strahlen mit Winkeln größer des Akzeptanzwinkels umzulenken und einzukoppeln, gleichzeitig sinkt aber beispielsweise durch Reflexionsverluste die Effizienz der Einkopplung bei den Strahlen, die an und für sich direkt eingekoppelt werden könnten, da auch diese die Linse passieren müssen.

Eine direkte Einkopplung der Strahlen, die innerhalb des Akzeptanzwinkels von beispielsweise der LED abgestrahlt werden, d.h. ohne eine vorherige Fokussierung durch refraktorische oder reflektorische optische Elemente, wäre besonders vorteilhaft, da dann keinerlei Verluste durch Strahlungsbrechung oder -bündelung in Kauf genommen werden müssten.

Andererseits sind optische Elemente notwendig, um auch die außerhalb des Akzeptanzwinkels emittierten Strahlen nutzen zu können.

Zusammenfassend werden bei allen bekannten Ausführungen für Lichtgeräte hoher Leistung aufwendige Anordnungen einer mehr oder weniger großen Zahl von lichtemittierenden Elementen verwendet, um möglichst hohe Intensitäten zu erreichen. Je größer die Anzahl der Einzelelemente dabei wird, desto aufwendiger und gleichzeitig verlustreicher werden die benötigten optischen Elemente oder Anordnungen, die zum Sammeln und Fokussieren des Lichtes der Einzelelemente notwendig werden. Werden jedoch wenige oder nur ein lichtemittierendes Element verwendet, so ist entweder die Strahlungsleistung gering oder andere gravierende Nachteile müssen in Kauf genommen werden, wie mangelhafte Hygiene oder kurze Lebensdauer.

Folglich ist es eine Aufgabe der vorliegenden Erfindung, ein Bestrahlungsgerät mit möglichst wenig lichtemittierenden Einheiten bereitzustellen, welches einfach zu fertigen ist aber eine zu Geräten mit LED-Arrays vergleichbare oder verbesserte Lichtleistung aufweist.

Eine weitere Aufgabe kann darin gesehen werden, ein Bestrahlungsgerät bereitzustellen, mit dem eine schnellere und sicherere Durchhärtung von lichthärtenden dentalen Füllungsmaterialien erreicht werden kann.

Schließlich soll durch verringerten Platzbedarf der lichtemittierenden Einheit und des benötigten Akkus das Gerät verkleinert, und nicht zuletzt die Herstellkosten reduziert werden können.

Außerdem soll die lichtemittierende Einheit eine lange Lebensdauer aufweisen. Wünschenswert ist auch eine einfache Reinigung des Geräts, wie sie mit üblichen Lichtleitern erreicht werden kann.

Diese Aufgabe wird durch ein Bestrahlungsgerät gelöst, wie es in den Ansprüchen beschrieben ist.

Die Begriffe "enthalten" und "umfassen" im Sinne der Erfindung leiten eine nichtabschließende Aufzählung von Merkmalen ein. Gleichermaßen ist der Begriff "ein" im Sinne von "mindestens eins" zu verstehen.

Es wurde gefunden, dass sich eine höhere Effizienz bzw. Strahlungsausbeute bei geringerem Aufwand und Platzbedarf durch Bereitstellung bzw. Einbau eines Reflektorelements, dass als selektive Sammeloptik zwischen lichtemittierende und lichtaufnehmende Einheit angeordnet ist, erreichen lässt.

Hierbei wird berücksichtigt, dass ein wesentlicher Anteil des Lichtes von beispielsweise einer LED derart abgestrahlt wird, dass es direkt in einen Lichtleiter eingekoppelt werden kann. Diese Strahlen sollen durch die selektive Sammeloptik bzw. das Reflektorelement nicht beeinflusst werden, da dies in der Regel mit einer Abschwächung verbunden wäre. Lediglich die Strahlen, deren Kippwinkel zur optischen Achse größer ist als der Akzeptanzwinkel, sollen derart abgelenkt und in Richtung der Lichtleiter Öffnung umgelenkt werden, dass ihre Einkopplung möglich wird.

Es wurde gefunden, dass weder die direkt eingekoppelten Strahlen, noch die abgelenkten Strahlen zufriedenstellende Lichtleitung ermöglichen. Erst durch optimale Nutzung beider Anteile in Summe, wie sie mit der erfindungsgemäßen Anordnung möglich ist, wird eine ausreichende Leistungsfähigkeit des Bestrahlungsgerätes garantiert.

Das Reflektorelement erstreckt sich über die gesamte Distanz von Abstrahloberfläche des lichtemittierenden Elements bis zur Eintrittsoberfläche des lichtaufnehmenden Elements. Der Begriff "gesamte Distanz" bedeutet aber nicht, dass zwischen Reflektorelement und lichtaufnehmendem Element überhaupt kein Spielraum sein darf, der beispielsweise konstruktions- und fertigungstechnisch bedingt sein kann. Der Spielraum sollte aber in jedem Fall minimiert werden.

Umfasst ist ein fertigungstechnisch bzw. konstruktiv bedingtes Spiel beim Übergang von der Austrittsoberfläche des Reflektorelements zur Eintrittsoberfläche des lichtaufnehmenden Elements, welches beispielsweise das Anbringen oder Aufsetzen eines Lichtleiters ermöglicht. Möglich ist auch ein kleiner Spalt zwischen der Austrittsoberfläche des Reflektorelements und der Eintrittsfläche der lichtaufnehmenden Einheit, in die eine dünne Glasscheibe eingebracht wird. Diese dient zum Schutz der empfindlichen Reflektoroberfläche vor Verschmutzung. Idealerweise weist die Glasscheibe eine beidseitige optische Vergütung zur Vermeidung von Strahlungsverlusten durch Reflexionen auf.

Ein geeignetes Reflektorelement hat beispielsweise Konusform und ist innen hohl, d.h. ist nicht mit einem im optischen Sinne brechenden Medium gefüllt.

Vorzugsweise hat das Reflektorelement die Gestalt einer zumindest dem lichtemittierenden Element zugewandten auf der Innenseite verspiegelten Kegelstumpffläche. Die kleinere Querschnittsfläche des Konus ist dabei der lichtemittierenden Einheit zugewandt.

Die lichtemittierende Einheit wird derart in einem Abstand vor dem lichtaufnehmendem Element angeordnet, dass der Anteil der Lichtstrahlen, der unmittelbar eingekoppelt werden kann (also Lichtstrahlen mit Winkeln kleiner gleich dem Akzeptanzwinkel) die Eintrittsfläche vollständig ausleuchtet.

Dies stellt für diesen Anteil des Lichtkegels die optimale Anordnung dar, da hierbei keine Verluste durch Brechung, Beugung oder Grenzflächenübergänge an irgendwelchen optischen Elementen auftreten. Bei faseroptischen Lichtleitern bedingt dies in der Regel, dass der Abstand zur lichtemittierenden Einheit in etwa größer oder gleich dem halben Durchmesser der Eintrittsöffnung der lichtaufnehmenden Einheit ist.

Die durch diese Anordnung definierte Kegelstumpffläche zwischen lichtemittierender Einheit und lichtaufnehmendem Element wird erfindungsgemäß somit durch ein Reflektorelement begrenzt. Dieses öffnet sich von dem Durchmesser der lichtemittierenden Einheit zu dem der lichtaufnehmenden Einheit, wodurch mit dem Abstand lichtemittierende Einheit zu lichtaufnehmende Einheit der Winkel des Kegels definiert ist.

Durch Anpassung des Querschnitts der Eintrittsöffnung der lichtaufnehmenden Einheit lassen sich somit bestimmte Winkel realisieren, um für die jeweilige Ausführung der lichtemittierenden Einheit eine optimale Anordnung zu wählen.

Alle Strahlen, die einen gegenüber dem Akzeptanzwinkel größeren Abstrahlwinkel aufweisen, treffen auf das Reflektorelement und werden dort reflektiert, wobei der Winkel gegenüber der optischen Achse nun um das Doppelte des Reflektorelementwinkels vermindert wird.

Trifft beispielsweise ein Lichtstrahl mit einem Winkel von 50° gegenüber der optischen Achse auf das Reflektorelement mit einem Öffnungswinkel von 10°, dann weist er nach der Reflexion einen Winkel von -30° auf, mit dem er auf den Lichtleiter trifft und nun eingekoppelt werden kann.

Das Reflektorelement weist diesbezüglich vorzugsweise folgende Merkmale auf:

Die Eintrittsöffnung des Reflektorelements ist so groß, so dass alle von der lichtemittierenden Einheit emittierten Strahlen aufgenommen werden können, d.h. in der Regel so groß wie die zum Einsatz kommende LED-Linse.

Die Austrittsöffnung des Reflektorelements hat in etwa den selben Durchmesser wie die Eintrittsöffnung des lichtaufnehmenden Elements.

Der Öffnungswinkel des Reflektorelements folgt der Beziehung: Neigungswinkel = 0,5 x (maximaler Strahlenwinkel - Akzeptanzwinkel).

Dabei kann der Neigungswinkel auch von höheren Werten am Anfang (nahe der lichtemittierenden Einheit) zu kleineren abnehmen, da die am Anfang reflektierten Strahlen einen höheren Verkippungswinkel aufweisen als die nahe am Lichtleiter.

Der maximale Strahlenwinkel wird durch die Abstrahlcharakteristik der lichtemittierenden Einheit vorgegeben und kennzeichnet die Strahlen, die noch zur Bestrahlung des Behandlungsortes verwendet werden sollen. Strahlen mit nochmals größerem Winkel werden entweder nicht oder nur mit vernachlässigbarer Intensität von dem lichtemittierenden Element emittiert, so dass deren Nutzung nicht zu einer signifikanten Erhöhung der Intensität beitragen würde.

Beispielsweise wird von gängigen Hochleistungsdioden 30 % der Gesammtintensität innerhalb des Akzeptanzwinkels üblicher Lichtleiter von +/- 30° emittiert, weitere 60 % in einem Winkelbereich zwischen 30° und 50°, die verbleibenden 10% mit Abstrahlwinkeln zwischen 50° und 90°. Da deren Nutzung einen zum 30° bis 50° Bereich vergleichbar geringen Beitrag liefern würde, wird sinnvollerweise in diesem Beispiel der maximale Strahlenwinkel auf 50° festgelegt.

Der maximale Strahlenwinkel kann somit beispielsweise in etwa 65°, vorzugsweise in etwa 55°, besonders bevorzugt in etwa 50° betragen.

Die zum Einsatz kommenden lichtemittierenden Einheiten weisen vorzugsweise eine Lebensdauer von vielen Hundert Stunden, vorzugsweise mehr als ein Tausend Stunden auf, emittieren in einem Bereich von 400 bis 500 nm, mit einem Emissionsmaximum zwischen 440 und 480 nm und verfügen über eine Lichtleistung von mindestens 100 mW, vorzugsweise mindestens 200 mW.

Das Bestrahlungsgerät zeichnet sich u.a. durch folgende Merkmale aus:

Es umfasst vorzugsweise nur ein Reflektorelement und verfügt über keine weiteren reflektorisch oder refraktorisch arbeitenden Sammeloptiken im Bereich zwischen lichtemittierender Einheit und Eintrittsöffnung der lichtaufnehmenden Einheit.

Es verfügt vorzugsweise über keine aktiven, mit elektrischem Strom betriebenen Kühlelemente.

Es kann vorzugsweise netzunabhängig betrieben werden.

Als Reflektorelementmaterial kommt ein polierter Metallkörper, aus beispielsweise Aluminium, Titan oder Edelstahl ebenso in Frage wie Metallfolien mit guten Reflexionseigenschaften, Verspiegelungsbeschichtungen oder auch z.B. metallfreie Interferenz-Spiegelfolien wie sie aus der WO 00/07044 bekannt und beispielsweise von 3M erhältlich sind.

Unter lichtemittierender Einheit im Sinne der Erfindung ist jede kompakte Form von Strahlungsquelle zu verstehen, die Licht erzeugt, vorzugsweise mit einer Wellenlänge im Bereich von 400 bis 500 nm. Vorzugsweise erfolgt diese Emission gerichtet. Dies kann durch in der lichtemittierenden Einheit integrierte optische Elemente, wie sie bei Hochleistungs-Leuchtdioden üblicherweise zum Einsatz kommen, erreicht werden. Es ist dabei unerheblich, wie der innere Aufbau der Einheit gestaltet ist, ob er aus einem einzelnen lichtemittierendes Element oder einem Zusammenschluss mehrerer lichtemittierenden Elemente besteht.

Insbesondere fallen unter den Begriff lichtemittierende Einheit lichtemittierende Dioden (LED). Möglich ist aber auch der Einsatz von Laserdioden, wie sie in der EP 0 755 662 A beschrieben werden.

Eine lichtaufnehmende Einheit im Sinne der Erfindung ist jede Vorrichtung, die fähig ist, Licht, das von der lichtemittierenden Einheit bzw. den lichtemittierenden Elementen erzeugt wird, aufzunehmen und gerichtet wieder abzugeben.

Üblicherweise handelt es sich hierbei um sogenannte Lichtleiterstäbe, die aus einer Vielzahl von gebündelten Glasfasern bestehen. Diese Lichtleiterstäbe sind über eine Kupplung oder ein Gewinde reversibel mit der lichtemittierenden Einheit bzw. dem diese enthaltenden Gehäuse verbindbar.

Umfasst sind aber auch herkömmliche Filterscheiben, Streulichtscheiben oder Lichtwellenkonverter, wie sie in der DE 100 06 286 C1 beschrieben werden.

Gegebenenfalls wird die lichtemittierende Einheit und/oder das Reflektorelement mit einer transparenten Scheibe abgedeckt, um die lichtemittierende Einheit und/oder das Reflektorelement bei abgenommenen Lichtleiter vor Feuchtigkeit und Verschmutzung zu schützen.

Die lichtemittierende Einheit wird vorzugsweise auf einer, üblicherweise flachen Platine montiert.

Das Problem der Abfuhr der beim Betrieb des Bestrahlungsgerätes von dem lichtemittierenden Element erzeugten Wärme lässt sich durch Verwendung von thermisch gut leitfähigem Platinenmaterial und/oder direkte thermisch leitfähige Befestigung des Elements auf einem Kühlkörper lösen. Die Wärme wird dabei durch Wärmeleitung an das Gerätegehäuse geleitet und von diesem an die Umgebung abgestrahlt. Somit kann auf den Einsatz von aktiven Kühlelementen, wie Lüftern oder Peeltierelementen, die zusätzlichen Strom verbrauchen und im Falle eines Lüfters einen hohen Geräuschpegel erzeugen, verzichtet werden. Des weiteren wird eine weitere Verbesserung der Hygiene erreicht, da keine Lüftungsschlitze vorgesehen werden müssen, da diese schlecht sauber zu halten sind.

Um die während des üblicherweise kurzzeitigen Betriebes anfallende Wärmemenge aufzufangen und damit die Temperatur der lichtemittierenden Einheit gering zu halten, was die Lebensdauer verlängert, kann ein zusätzliches Element hoher Wärmekapazität thermisch mit der der lichtemittierenden Einheit verbunden sein. Dieses speichert die beim Betrieb anfallende Wärmemenge, und gibt sie in den Behandlungspausen kontinuierlich über das thermisch gut leitfähige Gehäuse an die Umgebung ab.

Das Bestrahlungsgerät verfügt üblicherweise auch über eine elektronische Steuereinheit zur Steuerung von Spannung und Stromstärke für das lichtemittierende Element, eine Speichereinheit für elektrische Energie, wie Batterien oder Akkumulatoren, vorzugsweise Lithium-Ionen-, NiMH- oder Ni/Cd-Akkumulatoren, eine Anzeigeeinheit und ein Gehäuse.

Das Gehäuse ist vorzugsweise derart gestaltet, dass es im wesentlichen eine spaltenfreie Oberfläche aufweist, in die die Anzeigeinheit integriert ist.

Das erfindungsgemäße Belichtungsgerät findet insbesondere im Medizinbereich, vorzugsweise im Dentalbereich Anwendung und kann einerseits zum Ausleuchten des Behandlungsortes oder zum Bestrahlen von durch Licht härtbaren Massen, insbesondere dentalen Füllungsmaterialien, wie Compositen, Compomeren oder Glasionomerzementen dienen.

Im Gebrauch wird das Austrittsende des Lichtleiterstabes auf die Behandlungsstelle, etwa eine auszuhärtende Zahnfüllung, gerichtet und der Einschalttaster gedrückt, wodurch die LED beaufschlagt und gleichzeitig die Anzeigeeinheit eingeschaltet wird. Nach einer vorgegebenen oder einstellbaren Zeitspanne schaltet die Steuerschaltung die Stromzufuhr zu der Leuchtdiode und der Anzeigeeinheit ab.

Bevorzugte Ausführungsbeispiele werden nachstehend anhand der Zeichnungen erläutert.

Figur 1 zeigt einen Längsschnitt durch ein Bestrahlungsgeräts.

Figur 2 zeigt einen Längsschnitt eines Bestrahlungsgeräts im Bereich des Übergangs von lichtemittierendem Element zu lichtaufnehmendem Element.ohne Reflektorelement.

Figur 3 zeigt einen Längsschnitt gemäß Figur 1 mit einem Reflektorelement in Form eines Konus.

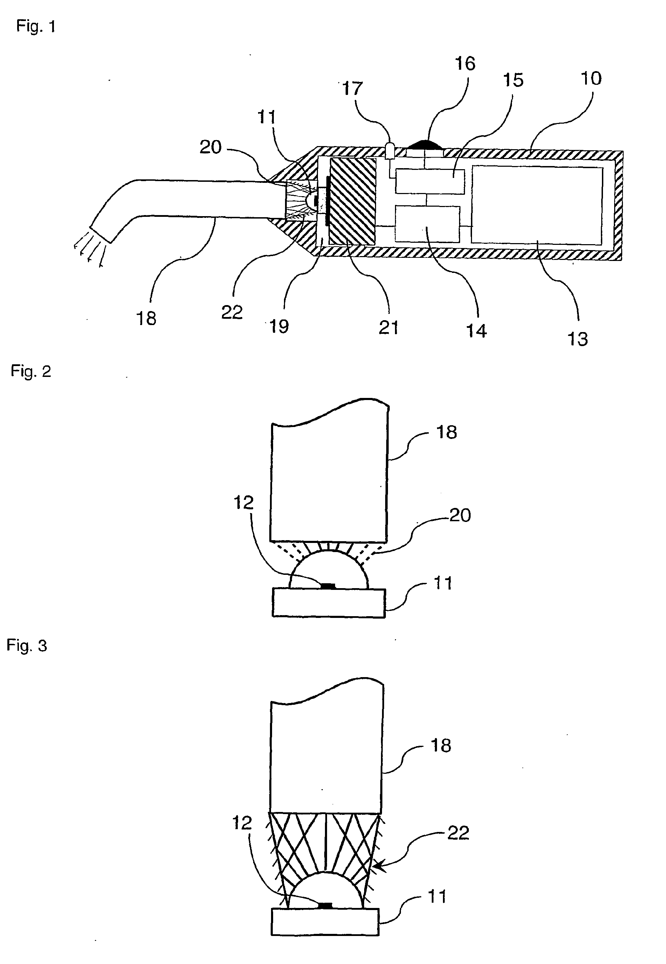

Das in Figur 1 gezeigte Handgerät zum Bestrahlen von dentalen Kunststoffen enthält im vorderen Bereich eines im wesentlichen zylindrischen Gehäuses (10) eine lichtemittierende Einheit (11) mit einem lichtemittierenden Element in Form eines LED-Chips (12).

Das lichtemittierende Element (12) wird aus einer, im hinteren Teil des Gehäuses (10) angeordneten Batterie (13) über eine Treiberstufe (14) gespeist, die von einer Steuerschaltung (15) zeitgesteuert wird. Die Steuerschaltung (15) ist mit einem seitlich am Gehäuse (10) angeordneten Einschalttaster (16) und einer ebenfalls seitlich am Gehäuse (10) angeordneten Anzeigediode (17) verbunden. Aus dem vorderen konischen Ende des Gehäuses (10) ragt eine lichtaufnehmende Einheit (18) in Form eines an seinem vorderen Ende gekrümmten Lichtleiterstabs heraus. Das lichtemittierende Element (12) befindet sich auf einer ebenen Halteplatte (19).

In Figur 2 ist dargestellt, welche von dem lichtemittierenden Element (12) emittierten Strahlen in beispielsweise einen Lichtleiter (18) eingekoppelt werden können und welche nicht. Die mit einem durchgezogenen Strich symbolisierten Strahlen lassen sich in den Lichtleiter einkoppeln, wohingegen die gestrichelt dargestellten Strahlen nicht eingekoppelt werden können, da ihr Winkel zur optischen Achse größer als der Akzeptanzwinkel des Lichtleiters ist.

Figur 3 entspricht im wesentlichen Figur 2 mit dem Unterschied, dass sich von der Oberfläche der lichtemittierenden Einheit (12) bis zur Eintrittsoberfläche des Lichtleiters (18) ein Reflektorelement (22) in Form einer verspiegelten Kegelstumpffläche erstreckt. Bedingt durch dieses Reflektorelement können auch die ansonsten auf Grund ihres Winkels, der größer als der Akzeptanzwinkel des Lichtleiters ist, nicht in den Lichtleiter einkoppelbaren Strahlen letztlich doch eingekoppelt werden, da der Betrag ihres Kippwinkels zur optischen Achse um das Doppelte des Reflektoröffnungswinkels in Folge der Reflexion reduziert wird. Die Strahlen, die innerhalb eines Lichtkelgels mit Winken kleiner als der Akzeptanzwinkel von der lichtemittierenden Einheit emittiert werden, beleuchten direkt die Eintrittsöffnung der des Lichtleiters, wodurch ihre Intensität bestmöglich genutzt werden kann.

Bezugszeichenliste:

10 Gehäuse
11 lichtemittierende Einheit
12 lichtemittierendes Elemente/Leuchtdiode
13 Batterie
14 Treiberstufe
15 Steuerschaltung
16 Einschalttaster

17    Anzeigeeinheit
18    lichtaufnehmende Einheit/Lichtleiterstab
19    Halteplatte
20    Fokusbereich
21    Wärmesenkenkörper
22    Reflektorelement

**Patentansprüche**

1.  Bestrahlungsgerät, mit:

    - einem Gehäuse (10);
    - einer einzelnen lichtemittierenden Einheit (11), die im Gehäuse angeordnet ist;
    - einer lichtaufnehmenden Einheit (18) mit einer Eintrittsöffnung; und
    - einem Reflektorelement (22), das sich über die gesamte Distanz zwischen lichtemittierender Einheit und Eintrittsöffnung der lichtaufnehmenden Einheit erstreckt und eine kleinere und eine größere Öffnung aufweist;
    - wobei die Öffnung mit dem kleineren Durchmesser der lichtemittierenden Einheit und die Öffnung mit dem größeren Durchmesser der lichtaufnehmenden Einheit zugewandt ist; und
    - wobei der Neigungswinkel ν des Reflektorelements der Beziehung folgt:

    $$\nu = 0,5 \times (\delta - \alpha)$$

    worin: δ der maximale Abstrahlwinkel ist, unter dem diejenigen Lichtstrahlen die lichtemittierende Einheit verlassen, die noch in den Lichtleiter eingekoppelt werden sollen; und α der Akzeptanzwinkel des Lichtleiters ist

2.  Bestrahlungsgerät nach Anspruch 1, wobei der Durchmesser der größeren Öffnung des Reflektorelements (22) kleiner oder gleich dem der lichtaufnehmenden Einheit (18) ist.

3.  Bestrahlungsgerät nach einem der vorstehenden Ansprüche, wobei die kleinere Öffnung des Reflektorelements (22) die lichtemittierende Einheit (11) zumindest teilweise umfasst.

4.  Bestrahlungsgerät nach einem der vorstehenden Ansprüche, wobei der Öffnungswinkel des Reflektorelements (22) sich kontinuierlich oder in mindestens einer Stufe von der kleineren Öffnung zur größeren Öffnung verkleinert.

5.  Bestrahlungsgerät nach einem der vorstehenden Ansprüche, wobei der Abstand zwischen lichtemittierender Einheit (11) und lichtaufnehmender Einheit (18) größer ist als der halbe Durchmesser der lichtaufnehmenden Einheit.

6.  Bestrahlungsgerät nach Anspruch 5, wobei die Länge des Reflektorelements (22) größer ist als der Abstand zwischen lichtemittierender und lichtaufnehmender Einheit (11, 18).

7.  Bestrahlungsgerät nach einem der vorstehenden Ansprüche, wobei die größere Öffnung des Reflektorelements (22) durch ein optisches Schutzglas abgedeckt ist.

8.  Bestrahlungsgerät nach Anspruch 9, wobei das optische Schutzglas auf einer oder beiden Seiten eine Vergütung aufweist.

9.  Bestrahlungsgerät nach einem der vorstehenden Ansprüche, wobei das Reflektorelement (22) ein auf der Innenseite reflektierender Kegelstumpf ist.

10. Bestrahlungsgerät nach Anspruch 9, wobei die Innenfläche des Kegelstumpfes metallisch verspiegelt ist oder eine Folie mit hoher optischer Reflexion umfasst.

11. Bestrahlungsgerät nach Anspruch 10, wobei die Folie aus einem Metall mit guten Reflexionseigenschaften besteht oder damit beschichtet ist.

12. Bestrahlungsgerät nach Anspruch 11, wobei die Folie eine metallfreie Multischicht-Interferenzreflektorfolie ist.

13. Bestrahlungsgerät nach einem der vorstehenden Ansprüche, wobei die lichtemittierende Einheit (11) eine blaue Hochleistungs-Leuchtdiode ist, umfassend mindestens ein lichtemittierendes Element, welches mindestens 0,25 mm$^2$, vorzugsweise zwischen 1 und 5 mm$^2$ groß ist, und die Einheit eine Strahlungsleistung zwischen 100 und 1400 mW, vorzugsweise zwischen 200 und 800 mW erzeugt.

14. Bestrahlungsgerät nach einem der vorstehenden Ansprüche, wobei die lichtemittierende Einheit (11) mit dem Gehäuse (10) thermisch verbunden ist.

15. Bestrahlungsgerät-nach Anspruch 14, wobei das Gehäuse (10) ganz oder teilweise ein Material hoher Wärmeleitfähigkeit und Wärmekapazität, umfasst, vorzugsweise ein Metall wie Aluminium, Zink oder Messing.

16. Bestrahlungsgerät nach Anspruch 15, wobei die lichtemittierende Einheit (11) zusätzlich mit einem Element mit einer Wärmekapazität zwischen 10 und 100 Joule/Kelvin, vorzugsweise zwischen 20 und 50 Joule/Kelvin thermisch verbunden ist.

**17.** Bestrahlungsgerät nach einem der vorstehenden Ansprüche, wobei das lichtemittierende Element (11) auf einer ebenen Halteplatte (19) hoher Wärmeleitfähigkeit montiert ist.

**18.** Bestrahlungsgerät nach einem der vorstehenden Ansprüche, wobei die lichtaufnehmende Einheit (18) gewählt ist aus einem starren Lichtleiterstab oder einem flexiblen Lichtleiter.

**19.** Bestrahlungsgerät, mit:

- einem Gehäuse (10);
- einer einzelnen lichtemittierenden Einheit (11), die im Gehäuse angeordnet ist;
- einer lichtaufnehmenden Einheit (18) mit einer Eintrittsöffnung; und
- einem Reflektorelement (22), das sich über die gesamte Distanz zwischen lichtemittierender Einheit und Eintrittsöffnung der lichtaufnehmenden Einheit erstreckt und eine kleinere und eine größere Öffnung aufweist;
- wobei die Öffnung mit dem kleineren Durchmesser der lichtemittierenden Einheit und die Öffnung mit dem größeren Durchmesser der lichtaufnehmenden Einheit zugewandt ist; und
- wobei das Reflektorelement selektiv nur diejenigen Lichtstrahlen, deren Abstrahlwinkel von der lichtemittierenden Einheit größer als der Akzeptanzwinkel der lichtaufnehmenden Einheit ist, in den gewünschten Eintrittswinkelbereich in die lichtaufnehmende Einheit ablenkt, jedoch die übrigen Lichtstrahlen unbeeinflusst lässt.

**Claims**

**1.** Irradiation appliance, having:

- a housing (10);
- a single light-emitting unit (11) which is arranged in the housing;
- a light-receiving unit (18) with an inlet opening; and
- a reflector element (22) which extends over the entire distance between the light-emitting unit and the inlet opening of the light-receiving unit and has a smaller and a larger opening;
- wherein the opening with the smaller diameter faces the light-emitting unit, and the opening with the larger diameter faces the light-receiving unit; and
- wherein the inclination angle $\nu$ of the reflector element follows the relationship:

$$\nu = 0.5 \times (\delta - \alpha)$$

where $\delta$ is the maximum emission angle at which those light beams which are still intended to be injected into the optical waveguide leave the light-emitting unit, and $\alpha$ is the acceptance angle of the optical waveguide.

**2.** Irradiation appliance according to Claim 1, wherein the diameter of the larger opening in the reflector element (22) is less than or equal to that of the light-receiving unit (18).

**3.** Irradiation appliance according to one of the preceding claims, wherein the smaller opening in the reflector element (22) at least partially surrounds the light-emitting unit (11).

**4.** Irradiation appliance according to one of the preceding claims, wherein the aperture angle of the reflector element (22) decreases in size continuously or in at least one step from the smaller opening to the larger opening.

**5.** Irradiation appliance according to one of the preceding claims, wherein the distance between the light-emitting unit (11) and the light-receiving unit (18) is greater than half the diameter of the light-receiving unit.

**6.** Irradiation appliance according to Claim 5, wherein the length of the reflector element (22) is greater than the distance between the light-emitting unit (11) and the light-receiving unit (18).

**7.** Irradiation appliance according to one of the preceding claims, wherein the larger opening in the reflector element (22) is covered by an optical protective glass.

**8.** Irradiation appliance according to Claim 9, wherein the optical protective glass has blooming on one or both faces.

**9.** Irradiation appliance according to one of the preceding claims, wherein the reflector element (22) is a truncated cone which is reflective on the inside.

**10.** Irradiation appliance according to Claim 9, wherein the inner surface of the truncated cone is metallically mirrored or is formed from a sheet with high optical reflection.

**11.** Irradiation appliance according to Claim 10, wherein the sheet is composed of a metal with good reflection characteristics, or is coated with such a metal.

**12.** Irradiation appliance according to Claim 11, wherein the sheet is a metal-free, multilayer interference reflector sheet.

**13.** Irradiation appliance according to one of the preceding claims, wherein the light-emitting unit (11) is a blue high-power light-emitting diode, comprising at least one light-emitting element whose size is at least $0.25\ mm^2$, preferably between 1 and 5 $mm^2$, and the unit produces a radiation power between 100 and 1400 mW, preferably between 200 and 800 mW.

**14.** Irradiation appliance according to one of the preceding claims, wherein the light-emitting unit (11) is thermally connected to the housing (10).

**15.** Irradiation appliance according to Claim 14, wherein the housing (10) is composed entirely or partially of a material of high thermal conductivity and thermal capacity, preferably a metal such as aluminum, zinc or brass.

**16.** Irradiation appliance according to Claim 15, wherein the light-emitting unit (11) is additionally thermally connected to an element having a thermal capacity between 10 and 100 Joule/Kelvin, preferably between 20 and 50 Joule/Kelvin.

**17.** Irradiation appliance according to one of the preceding claims, wherein the light-emitting element (11) is mounted on a planar holding plate (19) of high thermal conductivity.

**18.** Irradiation appliance according to one of the preceding claims, wherein the light-receiving element (18) is selected from a rigid optical waveguide rod, or a flexible optical waveguide.

**19.** Irradiation appliance, having:

- a housing (10);
- a single light-emitting unit (11) which is arranged in the housing;
- a light-receiving unit (18) with an inlet opening; and
- a reflector element (22) which extends over the entire distance between the light-emitting unit and the inlet opening of the light-receiving unit and has a smaller and a larger opening;
- wherein the opening with the smaller diameter faces the light-emitting unit, and the opening with the larger diameter faces the light-receiving unit; and
- wherein the reflector element selectively deflects only those light beams whose emission angle from the light-emitting unit is greater than the acceptance angle of the light-receiving unit in the desired inlet angle range into the light-receiving unit, but leaves the other light beams unaffected.

**Revendications**

**1.** Appareil d'irradiation comprenant :

- un boîtier (10) ;
- une unique unité émettrice de lumière (11) qui est disposée dans le boîtier ;
- une unité réceptrice de lumière (18) munie d'une ouverture d'entrée ; et
- un élément réflecteur (22) qui s'étend sur toute la distance entre l'unité émettrice de lumière et l'ouverture d'entrée de l'unité réceptrice de lumière et qui présente une plus petite et une plus grande ouverture;
- l'ouverture ayant le plus petit diamètre faisant face à l'unité émettrice de lumière et l'ouverture ayant le plus grand diamètre faisant face à l'unité réceptrice de lumière; et
- l'angle d'inclinaison v de l'élément réflecteur suivant la relation:

$$v = 0,5 \times (\delta - \alpha)$$

où $\delta$ désigne l'angle de rayonnement maximum sous lequel les rayons lumineux qui doivent encore être injectés dans la fibre optique quittent l'unité émettrice de lumière et $\alpha$ désigne l'angle d'acceptance de la fibre optique.

**2.** Appareil d'irradiation selon la revendication 1, le diamètre de l'ouverture la plus grande de l'élément réflecteur (22) étant inférieur ou égal à celui de l'unité réceptrice de lumière (18).

**3.** Appareil d'irradiation selon l'une des revendications précédentes, la plus petite ouverture de l'élément réflecteur (22) englobant au moins partiellement l'unité émettrice de lumière (11).

**4.** Appareil d'irradiation selon l'une des revendications précédentes, l'angle d'ouverture de l'élément réflecteur (22) se rétrécissant continuellement ou en au moins un palier entre la plus petite ouverture et la plus grande ouverture.

**5.** Appareil d'irradiation selon l'une des revendications précédentes, l'écart entre l'unité émettrice de lumière (11) et l'unité réceptrice de lumière (18) étant supérieur à la moitié du diamètre de l'unité réceptrice de lumière.

**6.** Appareil d'irradiation selon la revendication 5, la longueur de l'élément réflecteur (22) étant supérieure à l'écart entre l'unité émettrice de lumière et l'unité réceptrice de lumière (11, 18).

**7.** Appareil d'irradiation selon l'une des revendications précédentes, la plus grande ouverture de l'élément réflecteur (22) étant recouverte par un verre protecteur optique.

**8.** Appareil d'irradiation selon la revendication 9, le verre protecteur optique présentant un traitement antireflet sur une face ou sur les deux faces.

**9.** Appareil d'irradiation selon l'une des revendications précédentes, l'élément réflecteur (22) étant tronconique réfléchissant sur le côté intérieur.

**10.** Appareil d'irradiation selon la revendication 9, la surface intérieure du tronconique étant réfléchissante ou comprenant un film à haute réflexion optique.

**11.** Appareil d'irradiation selon la revendication 10, le film se composant ou étant recouvert d'un métal ayant de bonnes propriétés réfléchissantes.

**12.** Appareil d'irradiation selon la revendication 11, le film étant un film réflecteur d'interférences multicouches sans métal.

**13.** Appareil d'irradiation selon l'une des revendications précédentes, l'unité émettrice de lumière (11) étant une diode électroluminescente bleue de grande puissance comprenant au moins un élément émetteur de lumière dont la taille est d'au moins 0,25 mm$^2$, de préférence comprise entre 1 et 5 mm$^2$, et l'unité produit une puissance rayonnée comprise entre 100 et 1400 mW, de préférence comprise entre 200 et 800 mW.

**14.** Appareil d'irradiation selon l'une des revendications précédentes, l'unité émettrice de lumière (11) étant reliée thermiquement avec le boîtier (10).

**15.** Appareil d'irradiation selon la revendication 14, le boîtier (10) comprenant entièrement ou partiellement un matériau à conductivité thermique et capacité thermique élevées, de préférence un métal tel que l'aluminium, le zinc ou le laiton.

**16.** Appareil d'irradiation selon la revendication 15, l'unité émettrice de lumière (11) étant en plus reliée thermiquement avec un élément ayant une capacité thermique comprise entre 10 et 100 joules/Kelvin, de préférence entre 20 et 50 joules/Kelvin.

**17.** Appareil d'irradiation selon l'une des revendications précédentes, l'élément émetteur de lumière (11) étant monté sur une plaque support (19) plane ayant une conductivité thermique élevée.

**18.** Appareil d'irradiation selon l'une des revendications précédentes, l'unité réceptrice de lumière (18) étant choisie dans une tige en fibre optique rigide ou dans une fibre optique souple.

**19.** Appareil d'irradiation comprenant :

- un boîtier (10) ;
- une unique unité émettrice de lumière (11) qui est disposée dans le boîtier ;
- une unité réceptrice de lumière (18) munie d'une ouverture d'entrée ; et
- un élément réflecteur (22) qui s'étend sur toute la distance entre l'unité émettrice de lumière et l'ouverture d'entrée de l'unité réceptrice de lumière et qui présente une plus petite et une plus grande ouverture ;
- l'ouverture ayant le plus petit diamètre faisant face à l'unité émettrice de lumière et l'ouverture ayant le plus grand diamètre faisant face à l'unité réceptrice de lumière ; et
- l'élément réflecteur ne déviant de manière sélective dans la plage d'angle d'entrée souhaitée de l'unité réceptrice de lumière que les rayons lumineux dont l'angle de rayonnement depuis l'unité émettrice de lumière est supérieur à l'angle d'acceptance de l'unité réceptrice de lumière sans toutefois influencer les autres rayons lumineux.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 9010238 A
- WO 9736552 A
- WO 9916136 A
- JP 8141001 A
- WO 9935995 A
- WO 0013608 A
- WO 0211640 A2
- EP 0879582 A
- WO 0119280 A
- US 5634711 A
- US 6318996 B1
- WO 0164129 A1
- WO 0164129 A
- US 6318996 B
- WO 0007044 A
- EP 0755662 A
- DE 10006286 C1